# EUROPEAN PATENT APPLICATION

(11) **EP 2 474 450 A2**
(43) Date of publication of application: **11.07.2012**
(21) Application number: 10811044.6
(22) Date of filing: 27.08.2010
(51) Int. Cl.: B60R 1/08, B60R 1/02, B60R 1/06, B60R 1/062, B60R 1/07, B60R 1/074, B60R 1/072

(54) **IMPROVEMENT TO EXTERNAL REARVIEW MIRROR SYSTEM**

(30) Priority: 31.08.2009 BR 0903019
(71) Applicant: Metagal Industria e Comercio Ltda, Estado de Minas Gerais CEP 37540-000 (BR)
(72) Inventor: MIYABUKURO, Pedro Takashi, CEP 09090 - 521 - Santo André Estado de São Paulo (BR)
(74) Representative: Murgatroyd, Susan Elizabeth
(86) International application number: PCT/BR2010/000288
(87) International publication number: WO 2011/022801

(57) **Abstract**

The present abstract relates to a patent of invention for an exterior rearview mirror system pertaining to the field of motor vehicle accessories (1), essentially comprising: a mirror plate (10), base plate (20), electric actuator (30), frame (40) and support (41) assembly, base (50), position adjustment and safety impact protective mechanism (60) and others; said electric actuator (30) being associated with the: usual position adjustment circuitry (35), actuated by a button (36) accessible by the driver; and additionally, to an electric-electronic device comprised by: a module for enlarging the viewing field when reversing in parking maneuvers (70) actuated when the gearshift lever (101) of the vehicle is engaged in reverse gear; and module for enlarging the viewing angle when changing direction in the maneuver for changing lanes (80) actuated by the turn signal light (102) of the vehicle.

## Description

The present specification relates to a patent of invention for an exterior rearview mirror pertaining to the field of motor vehicle accessories, which has been improved to enlarge the field of view in the parking reversing maneuver, or to enlarge the viewing angle when changing direction for changing lanes, for the purpose of eliminating the hitherto "blind spots" occurring during such maneuvers.

The exterior rearview mirror is an accessory of a motor vehicle designed to allow the driver to have a view of the vehicle's rearward, and which essentially comprises: a mirror plate assembly; a base plate in whose front face the mirror plate assembly is mounted; an electric actuator module connected to the base plate which moves the base plate and mirror plate assembly, and which is connected to an electric circuitry featuring an actuating button accessible to the driver; a frame and support assembly, the frame being provided with an opening turned to the vehicle's rearward, where the mirror plate and base plate assembly is arranged, and a support where the actuator and the frame parts are mounted; a base where the frame and support assembly and the other components mounted therein are arranged; said base being mounted in the vehicle's side; and a position adjustment and safety impact protective mechanism housed in the base, where the frame and support assembly is mounted.

The electric actuator module, which is actuated by means of its usual actuating button, is designed to move the base plate and mirror plate assembly around the geometric, horizontal and/or vertical axes to adjust the mirror position according to the driver's needs based on his biotype (ergonomics) and/or choice.

The driver uses the exterior rearview mirror in various maneuvers requiring having a view of the vehicle's side and rearward. Among these maneuvers, reversing for parking and changing direction for changing lanes can be cited.

However, when reversing for parking purposes, the region adjacent the rear wheel of the vehicle, near the curb, is usually not seen through conventional exterior rearview mirrors, and thus this is a "blind spot" that makes the maneuver more difficult.

On the other hand, when changing direction for changing rolling lanes, most of the region of the side rolling lane and the area behind the vehicle is not shown by a conventional exterior rearview mirror, and there too another "blind spot" that hinders the maneuver is formed.

Therefore, the object of the present patent of invention is to provide an improved exterior rearview mirror that enables viewing the above-mentioned "blind spots".

Another objective is to provide an exterior rearview mirror that besides providing the above possibilities will not require high levels of construction or manufacturing complexity that makes it unattractive when compared to the usual mirrors.

Another object is to provide an exterior rearview mirror that in addition to the above possibilities is also low cost.

Thus, the improvement in exterior rearview mirror object of the present patent of invention was designed to overcome the aforementioned drawbacks and accomplish the above-mentioned objects, whose improvement is substantially comprised by: a mirror plate assembly, a base plate, an electric actuator assembly, a frame and support assembly, a base and adjustment and impact protective mechanism and other usual items; said electric actuator assembly being associated with electric-electronic modules for enlarging the field of view when reversing for parking and also changing direction for changing lanes essentially consisting of sensors sensitive to the movement of the shift gear lever and turn signal light, said sensors being associated, via a suitable processing circuitry, with the electric engines of the electric actuator, which actuate the mirror plate and base plate assembly around the geometric, horizontal and vertical axes, such that when said sensors are alternatively actuated, the electric engine(s) move(s) the mirror plate and base plate assembly up to positions where the driver will be able to see the hitherto "blind spots" (near the rear wheel of the vehicle) or the hitherto "blind spot" (in the vehicle's side rolling lane) from his normal driving position.

Such construction of the exterior rearview mirror overcomes the limitations of the usual exterior rearview mirrors, once it allows the driver to have a view of the hitherto "blind spot" near the rear wheel of the vehicle during parking maneuvers or the hitherto "blind spot" formed by the side lane behind the vehicle during a maneuver for changing lanes, according to the object of the invention.

Yet, the present improvement in exterior rearview mirror requires a relatively simple and low cost construction and manufacturing, according to the other objects of the invention.

The attached drawings refer to the improvement in exterior rearview mirror, object of the present patent, in which:
figs. 1 and 2 show an exploded perspective and assembled view of the exterior rearview mirror;
figs. 3 and 4 show a schematic side view of the exterior rearview mirror mounted in a motor vehicle and an enlarged schematic side section view of the mirror and an indication showing how the field of view is enlarged in reverse gear during a parking maneuver;
fig. 5 shows a flowchart of the functional characteristics of the mirror in the view field enlargement function in reverse gear, shown in the previous figures three and four;
figs. 6 and 7 show a plan schematic view of exterior rearview mirrors mounted in a motor vehicle and an enlarged schematic plan section view of the mirror and an indication showing its movement in the viewing angle enlargement function in a maneuver to change direction for changing lanes; and
fig. 8 shows a flowchart of the functional characteristics of the mirror in the viewing angle enlargement function in a maneuver to change direction for changing lanes, shown in the previous figures six and seven;

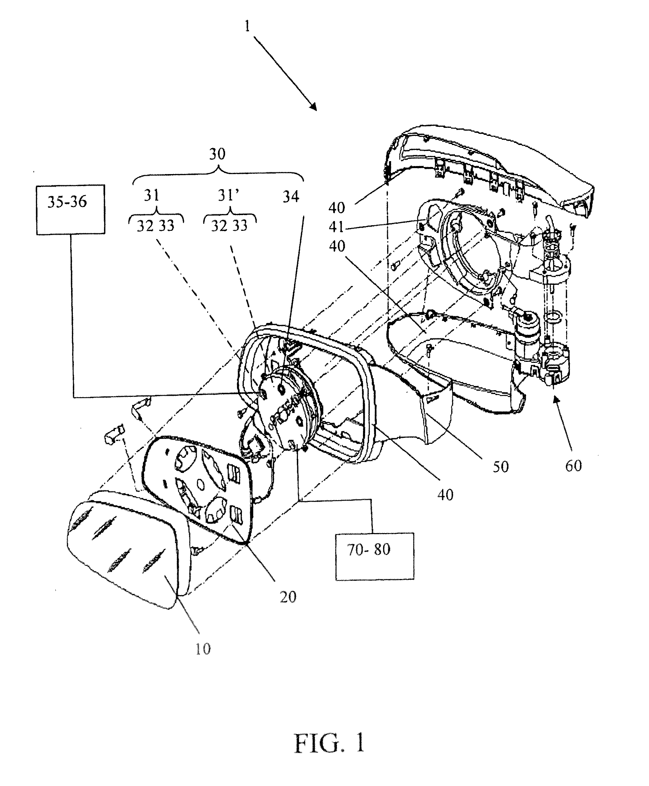

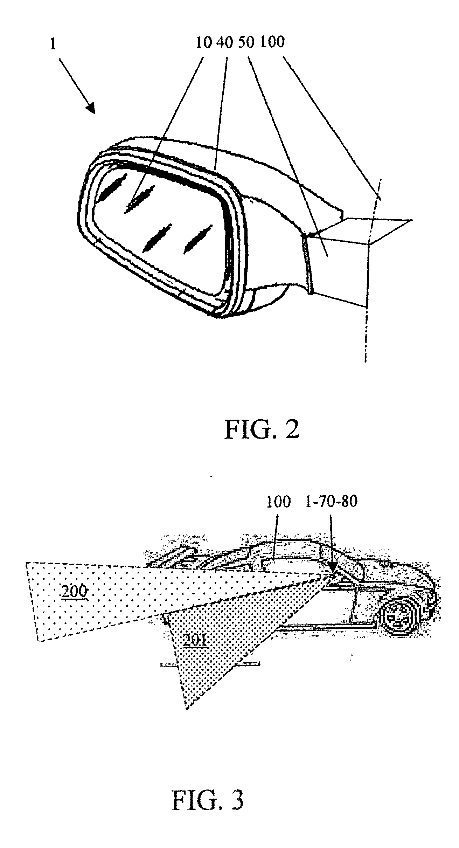

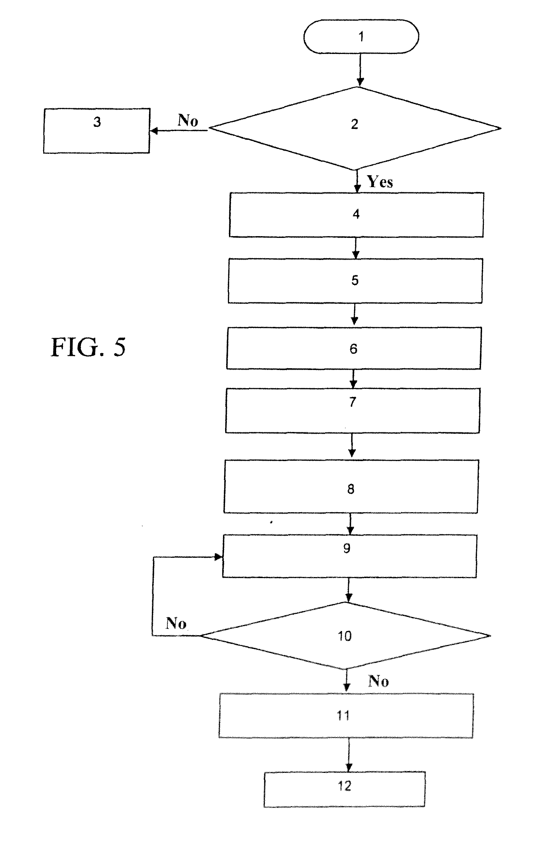

According to the drawings, the exterior rearview mirror 1 (figs. 1, 2), object of the present patent of invention, is part of motor vehicles 100 (figs. 3, 4, 6), usually designed to capture images from the vehicle's sides and regions 200 behind it to make easier for the driver to maneuver the vehicle, and the purpose of the present improvement in the exterior rearview mirror 1 is to capture images from the hitherto "blind spot" 201 (fig. 3), which is formed in the rear wheel and curb in parking maneuvers not captured by the usual rearview mirrors, or capture images of the hitherto "blind spot" 202 (fig. 5), formed by the side region behind the vehicle located in the vehicle's side rolling lane, when maneuvering to change direction for changing lanes, not captured by the usual rearview mirrors.

For such purpose, said exterior rearview mirror 1 is essentially comprised by (figs. 1, 2): a mirror plate assembly 10; a base plate 20 in whose front face the mirror plate assembly is mounted; an electric actuator assembly 30 connected to the base plate which moves the base plate 20 and mirror plate 10 assembly to adjust the position of this latter to the driver's needs; a frame 40 and support 41 assembly provided with an opening turned to the rearward of the vehicle where the mirror plate 10 and base plate 20 assembly is arranged and a support 41 where the actuator 30 and frame parts 40 are mounted; a base 50 in which the assembly consisting of the frame and support is arranged and which is mounted in the vehicle side; position adjustment and safety impact protective mechanism 60 housed in the base 50 where the support 41 of the frame and support 40-41 assembly is mounted.

The electric actuator assembly 30 is of the type essentially comprised by two driving assemblies 31, 31', which drive the mirror plate 10 and base plate 20 assembly around the geometric, horizontal "H" and vertical "V" axes of the mirror, respectively, to set the mirror plate 10 in a position according to the driver's needs and/or choice, each driving assembly 31, 31' being essentially comprised by: respective electric reversible movement engine 32 and movement transmission assembly 33 connected to the motor hub and a suitable point of the base plate 20; said electric actuation assembly 30 further comprising: a housing 34, where the electric engines 32 and transmissions 33 are mounted having means for fixedly securing to the support 41 of the frame and support 40-41 assembly; and associated electric circuitry 35 connected to the electric engines 32 and the vehicle's power supply and which features an actuating button 36 accessible to the driver.

According to the present improvement, the exterior rearview mirror 1, as described above, and more precisely its electric actuator assembly 30 is associated with an electric-electronic device for automatic enlargement of the viewing field and angle provided by the exterior rearview mirrors 1 in parking maneuvers and for changing lanes, essentially comprised by: a module for enlarging the viewing field when reversing in a parking maneuver 70; and a module for enlarging the viewing angle when changing direction in a maneuver for changing lanes 80.

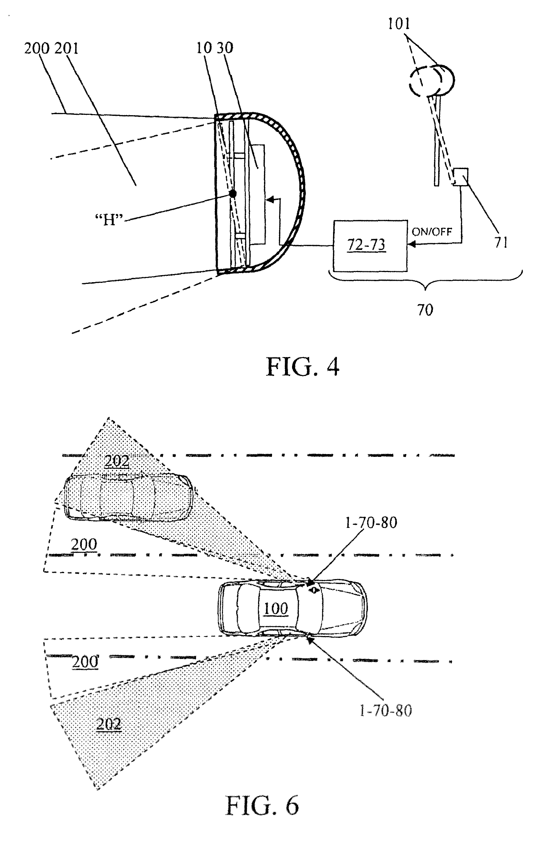

The module 70 is essentially comprised by (figs. 3, 4): a sensor (on/off) 71 associated with the gearshift lever 101 of the vehicle and built in the microprocessor (microcontroller); part 72 of the microcontroller circuitry arranged to: receive signals generated by the sensor 71 when engaging (on) and disengaging (off) in reverse gear, respectively; process the signals received and output corresponding command signals to turn the electric engine(s) 32 of the driving assembly(ies) 31 and/or 31' of the actuator 30 on and off, so that said engine(s) perform the respective working cycle(s) (turning direction and time) to move the mirror 10 and base plate 20 assembly around the geometric horizontal "H" and/or vertical "V" axes from the normal use position, where the mirror 10 displays the driver the area 200 behind the vehicle up to the position where it displays the hitherto "blind spot" 201 adjacent the rear wheel (going) and from the hitherto "blind spot" 201 to the normal use position (back); and a device, as for example, an "intelligent" circuit (software device) 73 that sets the working cycle(s) of the electric engine(s) 32 based on the normal use position and position to display the driver the "blind spot" 201.

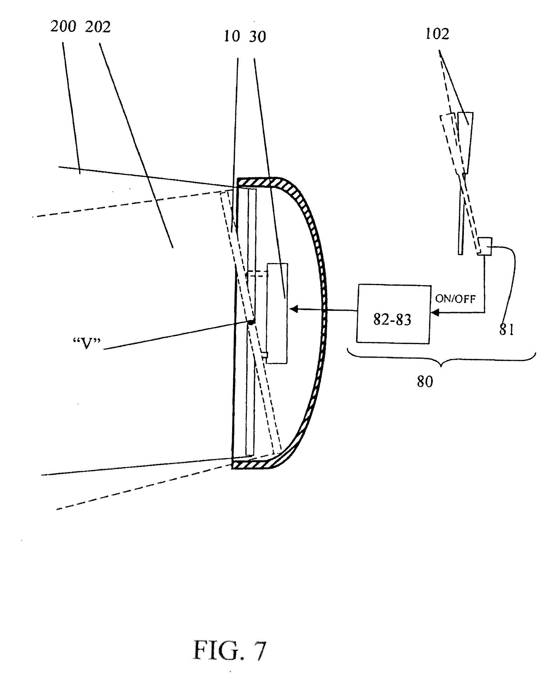

The module for enlarging the viewing angle when changing direction in the maneuver for changing lanes 80 is essentially comprised by (figs. 6, 7): a sensor (on/off) 81 associated with the turn signal light 102 of the vehicle and built in the microprocessor; part 82 of the microcontroller arranged to: receive signals generated by the sensor 81, respectively, in the on and off position of the turn signal light 102; and process said signals and output corresponding command signals to turn the electric engine(s) 32 of the driving assembly(ies) 31 and/or 31' of the actuator 30 on and off, so that said engine(s) perform the respective working cycle(s) (turning direction and time) and move the mirror 10 and base plate 20 assembly around the geometric horizontal "H" and/or vertical "V" axes from the normal use position, where the mirror 10 displays the driver, from his driving position, the area 200 behind the vehicle up to the position where it shows the hitherto "blind spot" 202 formed by the side region behind the vehicle located in the side rolling lane of the vehicle (going) and said hitherto "blind spot" 202 up to the normal position (back); and a device, as for example, an "intelligent" circuit (software device) 83 that sets the working cycle(s) of the electric engine(s) 32 based on the normal use position and position to display the driver the "blind spot" 202.

Therefore, the module for enlarging the viewing field when reversing in a parking maneuver 70, built as disclosed above, shows functional characteristics according to the flowchart in figure 5, comprising the following steps:
- Start - Block 1 comprises;
- Enraging the gearshift lever 101 in reverse gear? - Block 2. No, it comprises: Stand-by system - Block 3. Yes, it comprises: Sending information to the rearview mirror - Block 4;
- Sending information to the rearview minor - Block 4 comprises: Selection of the commands of the module 70 integrating the electric actuator 30 - Block 5, comprises;
- Operating actuation system - Block 6, comprises;
- Sending the mirror 10 movement signal - Block 7, comprises;
- Moving the mirror 10; Block 8, comprises;
- Driver views in the mirror 10 the lower area adjacent the rear tires of the vehicle, hitherto a "blind spot" 201 - Block 9, comprises;
- Reverse gear engaged? - Block 10. Yes, it comprises: Viewing the lower area adjacent the rear tires of the vehicle, hitherto a "blind spot" 201 - Block 9. No, it comprises: Return to the start position - Block 11, comprises;
- End - Block 12.

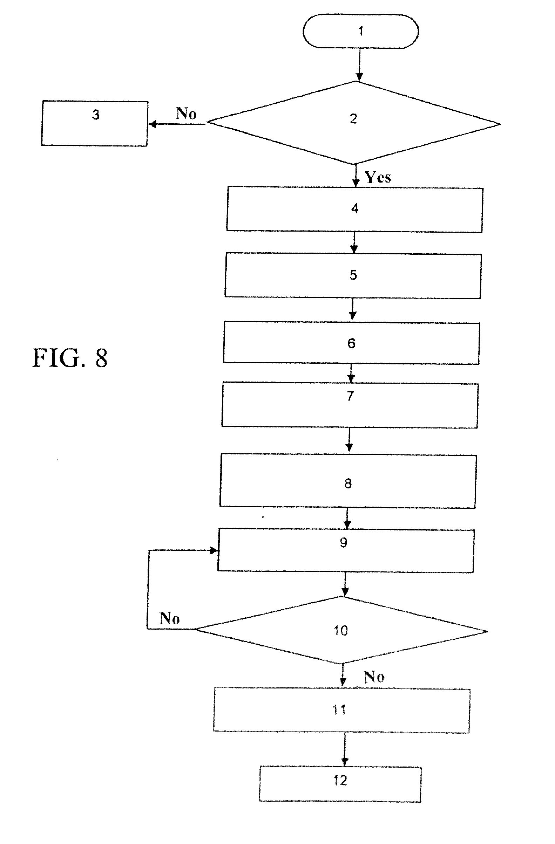

The module for enlarging the viewing angle when changing direction for changing lanes 80 shows functional characteristics according to the flowchart of figure 8, comprising the following steps:
- Start - Block 1 comprises;
- Actuating the turn signal light 102 - Brock 2. No, it comprises: Stand-by system - Brock 3. Yes, it comprises: Sending information to the rearview mirror - Block 4;
- Sending information to the rearview minor - Brock 4 comprises selecting the command of module 80 integrating the electric actuator 30 - Block 5, comprises;

- Operating actuation system - Block 6, comprises;
- Sending signal of the mirror 10 movement - Block 7, comprises;
- Moving the mirror 10 outwards comprises;
- Mirror 10 enlarges the viewing angle of the driver from his normal driving position, thus eliminating the area considered hitherto a "blind spot" 202 - Block 9, comprises;
- Turn signal light lever 102 in the neutral position or operation time exceeded? - Block 10. No, it comprises: Enlargement of the viewing angle, eliminating the area considered hitherto a "blind spot" 202 - Block 9. Yes, it comprises: Return to the start position - Block 11, comprises;
- End - Block 12.

Therefore, in short, the exterior rearview mirror system comprises: an external rearview mirror 1 essentially comprised by: the mirror plate 10, base plate 20, electric actuator 30, frame and support assembly 40-41, base 50, position adjustment and safety impact protective mechanism 60 and others having an electric actuator 30 associated with the: usual position adjustment circuitry 35 driven by a button 36 accessible to the driver and the electric-electronic device for automatic enlargement of the viewing field and angle provided by exterior rearview mirrors 1 in parking maneuvers and for changing rolling lanes; said device being essentially comprised by: a module for enlarging the viewing field in reversing parking maneuver 70, driven when the gearshift lever 101 of the vehicle is engaged in reverse gear; and module for enlarging the viewing angle when changing direction in the maneuver for changing rolling lanes 80 driven by the operation of the directional signaling lever 102 of the vehicle.

Therefore, the exterior rearview mirror system 1 of the present invention can be driven by the driver in the usual way through a button 36 for adjusting and securing the position that is more appropriate to the biotype of the driver. Additionally, when the driver engages the gearshift lever 101 in reverse gear for a parking maneuver, the exterior rearview mirror 1 moves automatically through the module 70 to reach a position that focuses and displays the driver in his usual driving position, the hitherto "blind spot" 201 (fig.) 3) near the rear wheels of the vehicle and curb, thus facilitating the maneuver. As the driver actuates the turn signal light 102 to signal a change in direction for changing lanes, the exterior rearview mirror 1 moves automatically through the module 80 to teach a position that displays the driver in his usual driving position the hitherto "blind spot" 202 (fig.) 6) formed by the side region behind the vehicle located in the side rolling lane of the vehicle, thus facilitating the maneuver.

For the sake of good understanding of the contents of this disclosure, the above description was made based on one exterior rearview mirror, however, it should be emphasized that the exterior rearview mirror system, object of the present patent of invention, is comprised by two exterior rearview mirrors, one right hand and one left hand, indistinctly having the above-described construction and functional characteristics.

According to the basic construction described above, the exterior rearview mirror system object of the present invention may be subject to changes in materials, dimensions, constructive details and/or functional and/or ornamental configuration without departing from the scope of the protection claimed.

## Claims

1. "IMPROVEMENT IN EXTERIOR REAR VIEW MIRROR SYSTEM", comprised by a pair of exterior rearview mirrors (1), each one of them comprising: a mirror plate (10) assembly; base plate (20); electric actuator assembly (30); frame (40) and support (41) assembly; base (50); position adjustment and safety impact protective mechanism (60) and others; said electric actuator (30) being essentially comprised by two driving assemblies (31), (31') consisting of respective electric engines (32) and transmissions (33), which move the mirror plate (10) and base plate (20) assembly around the geometric, horizontal "H" and vertical "V" axes of the mirror, respectively; said electric actuator assembly (30) being further comprised by: a housing (34), where the electric engines (32) and transmissions (33) are mounted having means for fixedly securing to the support (41) of the frame (40) and support (41) assembly **characterized in that** the electric actuator (30) is associated with an electric circuitry (35) featuring an actuating button (36) actuated by the driver to adjust the position of the exterior rearview mirror (1) according to his needs; and additionally associated with an electric-electronic device for automatic enlargement of the viewing field and angle provided by the exterior rearview mirrors (1) in parking maneuvers and for changing lanes, said device comprising: a module for enlarging the viewing field when reversing in the parking maneuver (70), associated with the gearshift lever (101) of the vehicle in reverse gear and which automatically moves the exterior rearview mirror (1) from the normal use position, where it displays the area (200) behind the vehicle, up to the position where it displays the driver in his normal driving position, a hitherto "blind spot" (201) which is formed in the region of the rear wheel and curb in parking maneuvers; and a module for enlarging the viewing angle when changing direction for changing lanes (80) associated with the turn signal light (102) of the vehicle and which automatically moves the exterior rearview mirror (1) from the normal use position up to a position where it displays the driver, in his normal driving position, a hitherto "blind spot" (202) which is formed in the side region behind the vehicle located in the side rolling lane of the vehicle, in maneuvers to change direction for changing lanes.

2. "IMPROVEMENT IN EXTERIOR REARVIEW MIRROR SYSTEM", according to claim 1, **characterized in that** the module (70) essentially comprises: a sensor (on/off) (71) associated with the gearshift lever (101) of the vehicle and built in the microprocessor (microcontroller); part (72) of the microcontroller circuitry arranged to: receive signals generated by the sensor (71) when engaging (on) and disengaging (off) in reverse gear, respectively; process the signals received and output corresponding command signals to turn the electric engine(s) (32) of the driving assembly(ies) (31) and/or (31') of the actuator (30) on and off, so that said engine(s) perform the respective working cycle(s) (turning direction and time) to move the mirror (10) and base plate (20) assembly around the geometric horizontal "H" and/or vertical "V" axes from the normal use position, where the mirror (10) displays the driver the area (200) behind the vehicle, up to the position where it displays the hitherto "blind spot" (201) adjacent the rear wheel (going) and from the hitherto "blind spot" (201) to the normal use position (back); and a device (73) to set the working cycle(s) of the electric engine(s) (32) based on the normal use position and position to display the driver the "blind spot" (201).

3. "IMPROVEMENT IN EXTERIOR REARVIEW MIRROR SYSTEM", according to claim 1, **characterized in that** the module (80) essentially comprises: a sensor (on/off) (81) associated with the turn signal light (102) of the vehicle and built in the microprocessor; part (82) of the microcontroller circuitry arranged to: receive signals generated by the sensor (81) in the on and off position of the turn signal light (102), respectively, and process said signals and output corresponding command signals to turn the electric engine(s) (32) of the driving assembly(ies) (31) and/or (31') of the actuator (30) on and off , so that said engine(s) perform the respective working cycle(s) (turning direction and time) and move the mirror (10) and base plate (20) assembly around the geometric horizontal "H" and/or vertical "V" axes from the normal use position, where the mirror (10) displays the driver, in his driving position, the area (200) behind the vehicle up to the position where it displays the hitherto "blind spot" (202) formed by the side region behind the vehicle located in the side rolling lane of the vehicle (going) and from said hitherto "blind spot" (202) up to the normal position (back); and a device (83) that sets the working cycle(s) of the electric engine(s) (32) based on the normal use position and position to display the driver the "blind spot" (202).
